# EUROPÄISCHE PATENTSCHRIFT

(11) **EP 2 849 249 B1**
(45) Veröffentlichungstag und Bekanntmachung des Hinweises auf die Patenterteilung: **24.05.2017**
(21) Anmeldenummer: 14179800.9
(22) Anmeldetag: 05.08.2014
(51) Int. Cl.: H01M 2/08, H01M 10/653, H01M 10/6563, H01M 10/6551, H01M 2/10, H01M 10/613, H01M 10/6554, H01M 10/6235

(54) **Wiederaufladbare Batterie**
Rechargeable battery
Pile rechargeable

(30) Priorität: 16.09.2013 DE 102013218532
(43) Veröffentlichungstag der Anmeldung: 18.03.2015
(73) Patentinhaber: ROBERT BOSCH GMBH, 70442 Stuttgart (DE)
(72) Erfinder: Zahn, Wolf, 70439 Stuttgart (DE)

(56) Entgegenhaltungen:
- EP-A1- 0 994 523
- EP-A1- 2 023 461
- EP-A2- 0 940 864
- EP-A2- 1 100 173
- EP-A2- 1 309 019
- DE-A1-102010 024 802
- GB-A- 2 457 819

## Beschreibung

### Stand der Technik

Es ist bereits ein Werkzeugakku mit einem Zellblock, mit einer Dichtvorrichtung, die dazu vorgesehen ist, den Zellblock wenigstens staubdicht und/oder wasserdicht zu verschließen, und mit einem Akkuaußengehäuse vorgeschlagen worden.

### Offenbarung der Erfindung

Die Erfindung geht aus von einem Akku, insbesondere Werkzeugakku, mit einem Zellblock, mit einer Dichtvorrichtung, die dazu vorgesehen ist, den Zellblock wenigstens staubdicht und/oder wasserdicht zu verschließen, und mit einem Akkuaußengehäuse.

Es wird vorgeschlagen, dass das Akkuaußengehäuse dazu vorgesehen ist, einen Luftstrom zwischen dem Akkuaußengehäuse und der Dichtvorrichtung entlang zu leiten. Insbesondere soll unter einem "Werkzeugakku" ein Akku verstanden werden, der dazu vorgesehen ist, ein Werkzeug mit elektrischer Energie zu versorgen. Insbesondere soll unter einem "Werkzeug" ein, dem Fachmann als sinnvoll erscheinendes Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Baustellenmessgerät, ein Multifunktionswerkzeug und/oder vorteilhaft ein Gartengerät, insbesondere ein Rasenmäher, verstanden werden. Alternativ oder zusätzlich könnte der Akku dazu vorgesehen sein, ein zumindest teilweise elektrisch angetriebenes Fahrrad mit elektrischer Energie zu versorgen. Insbesondere ist der Akku von einem Bediener zur Versorgung eines Geräts mit dem Gerät zerstörungsfrei und insbesondere werkzeuglos verbindbar und von dem Gerät trennbar. Unter einem "Zellblock" soll insbesondere eine Einheit mit mehreren Akkuzellen verstanden werden, die dazu vorgesehen sind, eine elektrische Energie insbesondere an ein Werkzeug abzugeben. Vorzugsweise umfasst der Zellblock zumindest zwei Akkuzellen, vorteilhaft zumindest acht Akkuzellen, besonders vorteilhaft zumindest 16 Akkuzellen. Vorteilhaft sind die Akkuzellen relativ zueinander ortsfest angeordnet. Besonders vorteilhaft ordnet ein Wärmeableitmittel des Zellblocks die Akkuzellen relativ zueinander an. Insbesondere weist der Zellblock ein Zellblockgehäuse auf, das dazu vorgesehen ist, das Wärmeableitmittel und vorteilhaft damit die Akkuzellen aneinander zu befestigen. Insbesondere bildet der Zellblock zumindest bei einem Montageschritt eine Baugruppe. Bevorzugt ist der Zellblock dazu vorgesehen, eine elektrische Energie mit einer Spannung größer 14 Volt, besonders vorteilhaft größer 20 Volt, bereitzustellen. Insbesondere ist der Zellblock dazu vorgesehen, eine elektrische Energie mit einer Spannung kleiner 50 Volt bereitzustellen. Insbesondere weist der Zellblock, und damit der Akku, eine Speicherkapazität von weniger als 200 Wattstunden, vorteilhaft weniger als 750 Wattstunden, besonders vorteilhaft weniger als 250 Wattstunden, auf. Insbesondere weist der Zellblock, und damit der Akku, eine Speicherkapazität von mehr als 2 Wattstunden, vorteilhaft mehr als 25 Wattstunden, besonders vorteilhaft mehr als 100 Wattstunden, auf. Unter einer "Dichtvorrichtung" soll insbesondere eine, dem Fachmann als sinnvoll erscheinende Vorrichtung verstanden werden, die dazu geeignet ist, ein Eindringen von Staub und/oder Feuchtigkeit in den Zellblock zu verhindern. Insbesondere verhindert die Dichtvorrichtung ein Eindringen von Staub und/oder Feuchtigkeit in einen insbesondere im Wesentlichen gesamten Bereich zwischen den Akkuzellen des Zellblocks. Insbesondere soll unter einer "Dichtvorrichtung" keine Vorrichtung verstanden werden, die eine einzelne Akkuzelle abdichtet oder isoliert. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere soll unter der Wendung "vor einem Eindringen von Staub und/oder Feuchtigkeit schützen" verstanden werden, dass die Dichtvorrichtung in zumindest einem Betriebszustand ein Eindringen von Wasser und/oder Staub in den Zellblock verhindert. Vorzugsweise schützt die Dichtvorrichtung den Zellblock gemäß der Norm IEC 60529 zumindest mit der Schutzklasse IP55, vorzugsweise IP67, besonders bevorzugt IP68. Vorzugsweise sind elektrische Kontakte des Akkus, insbesondere Energiekontakte und Kommunikationskontakte des Akkus, in einem Bereich angeordnet, der außerhalb eines von der Dichtvorrichtung geschützten Bereichs liegt. Unter einem "Akkuaußengehäuse" soll insbesondere ein Gehäuse verstanden werden, das dazu vorgesehen ist, den Zellblock vor mechanischen Einwirkungen von außen zu schützen. Vorzugsweise bildet das Akkuaußengehäuse eine Außenseite des Akkus. Insbesondere umfasst das Akkuaußengehäuse ein Mittel zur mechanischen Kopplung mit einem Werkzeug. Vorzugsweise umschließt das Akkugehäuse den Zellblock zumindest im Wesentlichen vollständig, das heißt insbesondere umschließt das Akkugehäuse einen Mittelpunkt des Zellblocks auf zwei zueinander senkrechten Ebenen um mehr als 270 Grad. Insbesondere soll unter einem "Luftstrom" eine technisch verursachte Bewegung von Luft durch einen vorgegebenen Raum verstanden werden. Vorzugsweise beträgt eine Geschwindigkeit des Luftstroms innerhalb des Akkuaußengehäuses in zumindest einem Betriebszustand an wenigstens einer Stelle wenigstens 1 cm/s, vorteilhaft wenigstens 2 cm/s, besonders vorteilhaft wenigstens 5 cm/s. Insbesondere weist der Luftstrom einen Volumenstrom von wenigstens 1 cm³/s, vorteilhaft wenigstens 2 cm³/s, besonders vorteilhaft wenigstens 5 cm³/s, auf. Insbesondere soll unter dem Begriff "zwischen" in diesem Zusammenhang verstanden werden, dass der Luftstrom durch einen Bereich verläuft, der auf zumindest einer Geraden liegt, die von dem Bereich ausgehend auf einer ersten Seite des Bereichs das Akkuaußengehäuse und auf einer zweiten, anderen Seite den Zellblock schneidet. Insbesondere soll unter "entlang leiten" in diesem Zusammenhang verstanden werden, dass der Luftstrom zumindest teilweise einen zumindest 2 cm langen, vorteilhaft zumindest 4 cm langen, besonders vorteilhaft zumindest 8 cm langen, von dem Akkuaußengehäuse und dem Zellblock begrenzten Tunnel passiert. Durch die erfindungsgemäße Ausgestaltung des Akkus kann der Zellblock vorteilhaft konstruktiv einfach staubdicht und/oder wasserdicht ausgestaltet werden und der Akku mit einem Akkuladegerät geladen werden, das auf einen Luftstrom in einem Bereich angewiesen ist, in dem bei einem Ladevorgang der Akku angeordnet ist.

In einer weiteren Ausgestaltung wird vorgeschlagen, dass das Akkuaußengehäuse eine Luftstromöffnung begrenzt, die dazu vorgesehen ist, den Luftstrom insbesondere des Akkuladegeräts in das Akkuaußengehäuse einzuleiten, wodurch ein geringer Luftwiderstand erreicht werden kann. Unter einer "Luftstromöffnung" soll insbesondere eine Öffnung verstanden werden, durch die der Luftstrom in zumindest einem Betriebszustand in das Akkuaußengehäuse eintritt oder das Akkuaußengehäuse verlässt. Vorzugsweise weist die Luftstromöffnung einen effektiven Öffnungsquerschnitt von mehr als 1 cm², besonders bevorzugt von mehr als 2 cm² auf. Vorzugsweise wird die Luftstromöffnung von einem einzelnen Gehäuseteil des Akkuaußengehäuses begrenzt. Alternativ könnten mehrere Gehäuseteile des Akkuaußengehäuses die Luftstromöffnung begrenzen. Insbesondere soll unter "einleiten" verstanden werden, dass der Luftstrom in zumindest einem Betriebszustand durch die Luftstromöffnung in das Akkuaußengehäuse eintritt.

Des Weiteren wird vorgeschlagen, dass das Akkuaußengehäuse dazu vorgesehen ist, den Luftstrom durch zumindest einen Gehäusespalt des Akkuaußengehäuses auszuleiten, wodurch ein vorteilhafter Schutz vor mechanischen Einwirkungen durch Öffnungen erreicht werden kann, durch die der Luftstrom aus dem Gehäuse austritt. Unter einem "Gehäusespalt" soll insbesondere eine vom dem Akkuaußengehäuse begrenzte Öffnung verstanden werden, die zwischen zwei Gehäuseteilen des Akkuaußengehäuses angeordnet ist. Vorzugsweise weist der Gehäusespalt in zumindest einer Richtung eine maximale Abmessung, also ein Spaltmaß, kleiner als 5 mm, vorteilhaft kleiner als 2 mm, besonders vorteilhaft kleiner als 1 mm, auf. Alternativ könnte das Akkuaußengehäuse zumindest eine weitere Luftstromöffnung begrenzen, die dazu vorgesehen ist, den Luftstrom insbesondere eines Akkuladegeräts insbesondere bei einem Ladevorgang aus dem Akkuaußengehäuse auszuleiten. Unter "ausleiten" soll insbesondere verstanden werden, dass der Luftstrom in zumindest einem Betriebszustand durch die weitere Luftstromöffnung aus dem Akkuaußengehäuse austritt.

Ferner wird vorgeschlagen, dass die Dichtvorrichtung eine Dichtfolie aufweist, die den Zellblock auf zumindest einer Ebene umschließt, wodurch konstruktiv einfach eine wasserdichte und/oder staubdichte Ausgestaltung möglich ist. Insbesondere soll unter einer "Dichtfolie" eine Folie verstanden werden, die dazu vorgesehen ist, einen von dem Zellblock aufgespannten Bereich staub- und/oder wasserdicht zu verschließen. Insbesondere ist die Dichtfolie dünner als 1000 µm, bevorzugt dünner als 500 µm und/oder besonders bevorzugt dünner als 200 µm. Insbesondere ist die Dichtfolie als eine Prägefolie ausgebildet. Vorteilhaft ist die Dichtfolie als eine insbesondere durch Wärmeeinwirkung selbstschrumpfende Folie ausgebildet. Vorzugsweise ist die Dichtfolie schlauchförmig ausgebildet. Alternativ könnte die Dichtfolie sackförmig ausgebildet sein. Alternativ oder zusätzlich zu der Dichtfolie könnten Stoßstellen zwischen verschiedenen Bauteilen des Zellblockgehäuses durch die Dichtvorrichtung wasserdicht und/oder staubdicht verschlossen werden. Unter dem Begriff "auf zumindest einer Ebene umschließt" soll in diesem Zusammenhang insbesondere verstanden werden, dass die Dichtfolie einen Mittelpunkt des Zellblocks zumindest auf der Ebene um mehr als 180 Grad, vorteilhaft um mehr als 270 Grad, besonders vorteilhaft um 360 Grad, umgibt.

Zudem wird vorgeschlagen, dass der Akku eine Akkukühlvorrichtung aufweist, die dazu vorgesehen ist, den Zellblock im Wesentlichen von dem Luftstrom unabhängig zu kühlen, wodurch ein Laden mit einem Akkuladegerät vorteilhaft möglich ist, das keinen Luftstrom durch den Akku erzeugt. Unter einer "Akkukühlvorrichtung" soll insbesondere eine Vorrichtung verstanden werden, die dazu vorgesehen ist, eine bei einem Ladevorgang und/oder einem Entladevorgang des Zellblocks entstehende Wärme während des Vorgangs an eine Umgebung zumindest im Wesentlichen abzugeben. Vorzugsweise verhindert die Akkukühlvorrichtung eine Überhitzung des Zellblocks bei dem Ladevorgang und/oder dem Entladevorgang. Insbesondere soll unter der Wendung "im Wesentlichen von dem Luftstrom unabhängig" verstanden werden, dass höchstens 40 %, vorteilhaft höchstens 25 %, einer bei einem Ladevorgang und/oder einem Entladevorgang abgeführten Wärmeenergie durch den Luftstrom durch das Akkuaußengehäuse abgeführt werden.

Weiterhin wird vorgeschlagen, dass die Akkukühlvorrichtung zumindest ein in dem Zellblock angeordnetes Wärmeableitmittel aufweist, das dazu vorgesehen ist, Wärme aus dem Zellblock abzuleiten, wodurch eine vorteilhafte Kühlung erreicht werden kann. Insbesondere soll unter einem "Wärmeableitmittel" ein Mittel verstanden werden, das eine Wärmeleitfähigkeit größer als 5 W/(m K), vorteilhaft größer als 25 W/(m K), besonders vorteilhaft größer als 100 W/(m K), aufweist. Insbesondere ist das Wärmeableitmittel als ein Metallteil ausgebildet, vorteilhaft als ein Aluminiumteil, besonders vorteilhaft als ein Aluminiumprofil. Alternativ könnte das Wärmeableitmittel aus einem anderen, dem Fachmann als sinnvoll erscheinenden Material ausgebildet sein, beispielsweise aus Kohlenstoff, und/oder ein, dem Fachmann als sinnvoll erscheinendes Wärmeableitelement aufweisen, beispielsweise eine Heatpipe und/oder Kohlenstoffnanoröhrchen. Vorzugsweise ist das Wärmeableitmittel dazu vorgesehen, die Akkuzellen zu positionieren. Insbesondere ist das Wärmeableitmittel dazu vorgesehen, die Akkuzellen vor mechanischen Einwirkungen zu schützen. Vorteilhaft ist das Wärmeableitmittel dazu vorgesehen, zumindest im Vergleich zu anderen Akkuzellen innenliegende Akkuzellen zu kühlen. Bevorzugt weist das Wärmeableitmittel entlang einer Geraden eine Erstreckung auf, die zumindest 25 %, vorteilhaft zumindest 50 %, besonders vorteilhaft zumindest 75 %, einer Erstreckung des Zellblocks auf der Geraden beträgt. Insbesondere soll unter einer "Wärme" eine bei einem Laden und Entladen des Zellblocks in den Akkuzellen entstehende Verlustwärme verstanden werden. Unter dem Begriff "ableiten" soll in diesem Zusammenhang insbesondere verstanden werden, dass das Wärmeableitmittel die Akkuzellen in zumindest einem Betriebszustand kühlt. Insbesondere leitet das Wärmeableitmittel oder ggf. leiten die Wärmeableitmittel des Zellblocks einen wesentlichen Anteil der in den Akkuzellen entstehenden und insgesamt abgeleiteten Wärme ab, das heißt insbesondere in zumindest einem Betriebszustand mehr als 30 % der insgesamt abgeleiteten Wärme, vorteilhaft mehr als 50 % der insgesamt abgeleiteten Wärme, besonders vorteilhaft mehr als 75 % der insgesamt abgeleiteten Wärme.

In einer vorteilhaften Ausbildung der Erfindung wird vorgeschlagen, dass die Akkukühlvorrichtung ein Wärmeabstrahlmittel aufweist, das dazu vorgesehen ist, die von dem Wärmeableitmittel abgeleitete Wärme zumindest abzustrahlen, wodurch eine vorteilhafte Kühlung von dem Luftstrom unabhängig erreicht werden kann. Unter einem "Wärmeabstrahlmittel" soll insbesondere ein Mittel verstanden werden, das dazu vorgesehen ist, die aus dem Zellblock abgeleitete Wärme an eine Umgebung abzugeben, und zwar zumindest abzustrahlen. Vorteilhaft gibt das Wärmeabstrahlmittel zusätzlich einen Teil der abgeleiteten Wärme durch Konduktion und insbesondere Konvektion an eine umgebende Luft ab. Bevorzugt bildet das Wärmeabstrahlmittel zumindest eine Außenfläche des Akkus. Insbesondere weist das Wärmeabstrahlmittel an der Außenfläche Kühlrippen, eine schwarze Färbung und/oder eine Beschichtung auf, die zur Optimierung einer Wärmeabstrahlung vorgesehen ist. Vorzugsweise weist das Akkugehäuse mehrere Wärmeabstrahlmittel auf, die besonders bevorzugt an unterschiedlichen Außenseiten des Akkus angeordnet sind. Alternativ könnte das Akkugehäuse genau ein Wärmeabstrahlmittel aufweisen, das insbesondere auf mehreren Seiten und vorteilhaft auf genau einer Seite des Akkus angeordnet ist. Des Weiteren könnte das Akkugehäuse zumindest drei, vorteilhaft zumindest vier oder besonders vorteilhaft zumindest fünf Wärmeabstrahlmittel aufweisen, die besonders bevorzugt an unterschiedlichen Außenseiten des Akkus angeordnet sind. Vorzugweise sind das Wärmeableitmittel und das Wärmeabstrahlmittel als voneinander getrennt ausgebildete Bauteile gebildet. Insbesondere soll unter dieser Wendung verstanden werden, dass das Wärmeableitmittel und das Wärmeabstrahlmittel in zumindest einem Montageschritt als zwei verschiedene Bauteile ausgebildet sind. Vorteilhaft sind das Wärmeableitmittel und das Wärmeabstrahlmittel nach einer Montage stoffschlüssig, formschlüssig und/oder kraftschlüssig miteinander verbunden. Besonders vorteilhaft sind das Wärmeableitmittel und das Wärmeabstrahlmittel nach einer Montage formschlüssig und kraftschlüssig miteinander verbunden.

Des Weiteren wird ein System mit einem Akkuladegerät und einem erfindungsgemäßen Akku vorgeschlagen.

Des Weiteren wird vorgeschlagen, dass das Akkuladegerät eine Ladegerätelektronik und eine Ladegerätkühlvorrichtung aufweist, die dazu vorgesehen ist, den durch den Akku geleiteten Luftstrom zumindest teilweise zur Kühlung der Ladegerätelektronik zu verwenden, wodurch Akkus, die den Luftstrom zur Kühlung verwenden, vorteilhaft schnell geladen werden können. Unter einer "Ladegerätelektronik" soll insbesondere eine Elektronik verstanden werden, die zumindest dazu vorgesehen ist, eine Netzspannung in eine Ladespannung zu wandeln. Vorzugsweise ist die Ladegerätelektronik dazu vorgesehen, einen Ladevorgang zu steuern und vorteilhaft zu regeln. Unter einer "Ladegerätkühlvorrichtung" soll insbesondere eine Ladegerätkühlvorrichtung verstanden werden, die dazu vorgesehen ist, zumindest die Ladegerätelektronik zu kühlen. Vorzugsweise bläst die Ladegerätkühlvorrichtung den Luftstrom durch die Ladegerätelektronik. Alternativ könnte die Ladegerätkühlvorrichtung den Luftstrom an einem thermisch mit der Ladegerätelektronik gekoppelten Kühlkörper entlang blasen.

Ferner wird vorgeschlagen, dass die Kühlvorrichtung einen Ventilator aufweist, der den Luftstrom erzeugt, wodurch konstruktiv einfach ein vorteilhafter Luftstrom erzeugt werden kann. Unter "erzeugen" soll in diesem Zusammenhang verstanden werden, dass eine Bewegung des Ventilators den Luftstrom verursacht.

Der erfindungsgemäße Akku soll hierbei nicht auf die oben beschriebene Anwendung und Ausführungsform beschränkt sein. Insbesondere kann der erfindungsgemäße Akku zu einer Erfüllung einer hierin beschriebenen Funktionsweise eine von einer hierin genannten Anzahl von einzelnen Mitteln, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einem erfindungsgemäßen Akku und einem Akkuladegerät, das einen Luftstrom durch ein Akkuaußengehäuse des Akkus erzeugt,
- Fig. 2: den Akku aus Figur 1 in einer perspektivischen Darstellung,
- Fig. 3: den Akku aus Figur 1 in einer perspektivischen Darstellung, wobei das Akkuaußengehäuse teilweise als Schnitt dargestellt ist, und
- Fig. 4: einen Schnitt des Akkus aus Figur 1 durch eine Luftstromöffnung des Akkuaußengehäuses.

### Beschreibung des Ausführungsbeispiels

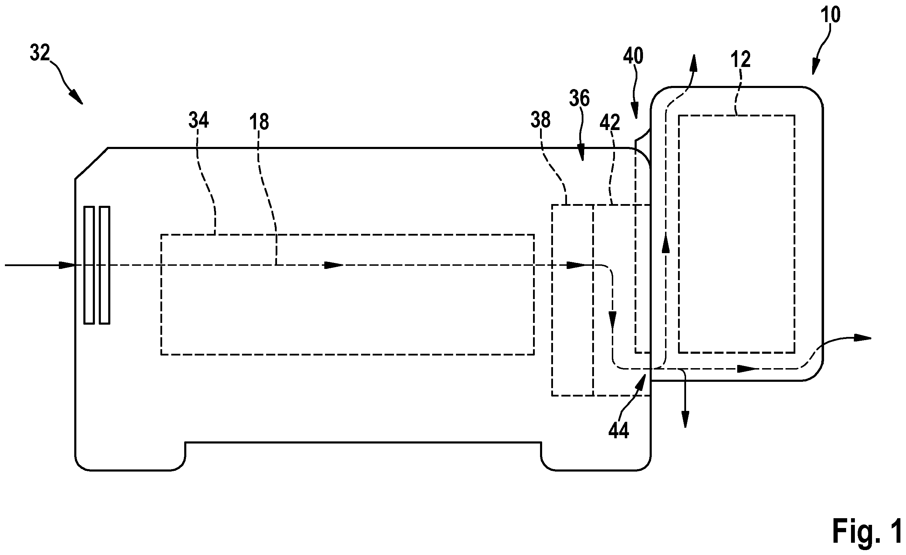

Figur 1 zeigt ein System mit einem Akku 10 und einem Akkuladegerät 32. Das Akkuladegerät 32 ist dazu vorgesehen, den Akku 10 zu laden und bei einem Ladevorgang zu kühlen. Das Akkuladegerät 32 weist eine Ladegerätelektronik 34, eine Ladegerätkühlvorrichtung 36 und eine Akkuschnittstelle 40 auf. Die Ladegerätelektronik 34 ist dazu vorgesehen, eine Netzspannung in eine Ladespannung des Akkus 10 zu wandeln.

Die Ladegerätkühlvorrichtung 36 ist dazu vorgesehen, die Ladegerätelektronik 34 zu kühlen. Des Weiteren ist die Ladegerätkühlvorrichtung 36 dazu vorgesehen, einen Luftstrom 18 in den Akku 10 einzuleiten. Die Ladegerätkühlvorrichtung 36 weist einen Ventilator 38 und eine Luftstromleiteinheit 42 auf. Der Ventilator 38 erzeugt den Luftstrom 18, den die Luftstromleiteinheit 42 in den Akku 10 leitet. Die Akkuschnittstelle 40 weist eine Luftstromöffnung 44 auf, durch die der Luftstrom 18 aus dem Akkuladegerät 32 ausgeleitet wird. Alternativ könnte ein Akkuladegerät einen Luftstrom aus einem Akku heraussaugen.

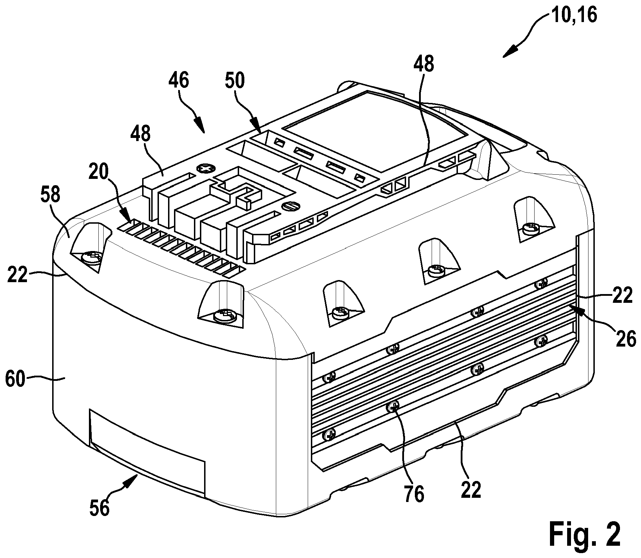

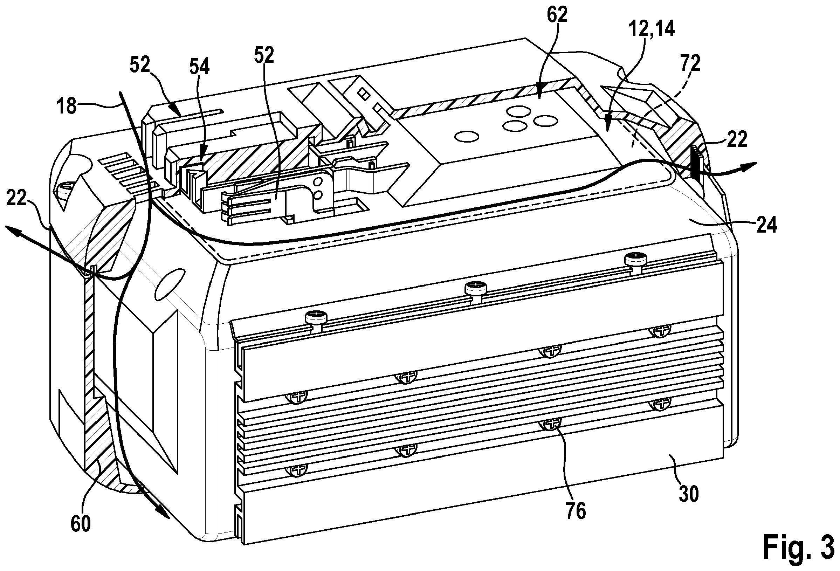

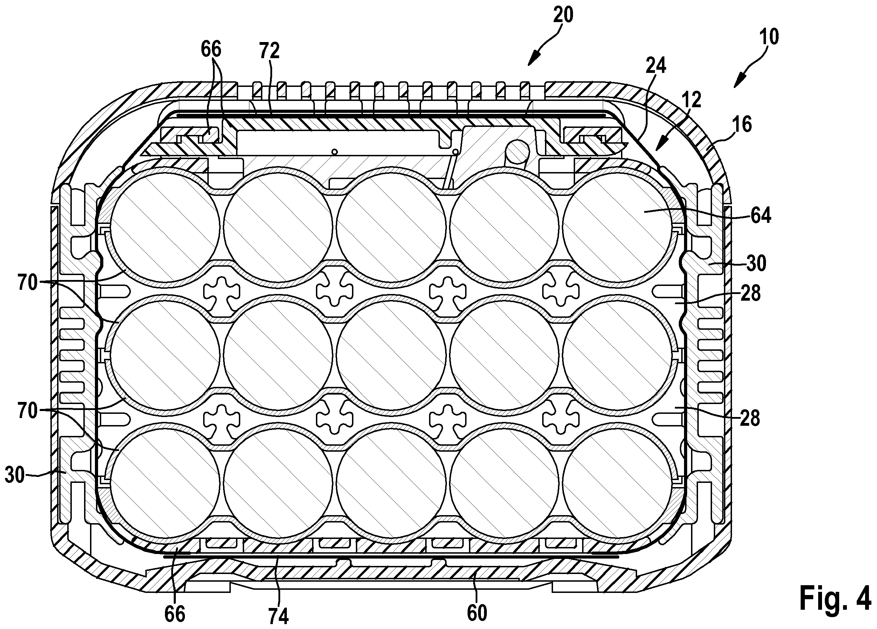

Die Figuren 2 bis 4 zeigen den Akku 10. Der Akku 10 ist als ein Werkzeugakku ausgebildet. Der Akku 10 ist dazu vorgesehen, ein nicht näher dargestelltes Werkzeug mit einer elektrischen Betriebsenergie zu versorgen. Der Akku 10 weist einen Zellblock 12, eine Dichtvorrichtung 14, ein Akkuaußengehäuse 16, eine Akkukühlvorrichtung 26 und eine Werkzeugschnittstelle 46 auf.

Die Werkzeugschnittstelle 46 ist dazu vorgesehen, eine mechanische und eine elektrische Verbindung mit dem Werkzeug herzustellen. Zur mechanischen Verbindung weist die Werkzeugschnittstelle 46 Führungsschienen 48 und ein Rastmittel 50 auf. Diese Elemente werden von dem Akkuaußengehäuse 16 gebildet. Die Werkzeugschnittstelle 46 weist zur elektrischen Verbindung Energiekontakte 52 und Kommunikationskontakte 54 auf. Diese Kontakte 52, 54 sind an dem Zellblock 12 angeordnet.

Das Akkuaußengehäuse 16 weist einen Grundkörper 56 und ein Deckelelement 58 auf. Die Werkzeugschnittstelle 46 ist an dem Deckelelement 58 angeordnet. Das Deckelelement 58 bildet eine Oberseite des Akkus 10. Das Deckelelement 58 ist als ein Kunststoffteil ausgebildet. Das Deckelelement 58 begrenzt eine Luftstromöffnung 20, durch die das Akkuladegerät 32 den Luftstrom 18 in das Akkuaußengehäuse 16 bei einem Ladevorgang einbläst. Das Akkuaußengehäuse 16 ist dazu vorgesehen, den Luftstrom 18 außen an dem Zellblock 12 entlang zu leiten. Die Luftstromöffnung 20 weist mehrere Stege auf, die dazu vorgesehen sind, ein Eindringen von größeren Objekten zu verhindern.

Der Luftstrom 18 tritt durch verschiedene Gehäusespalte 22 des Akkuaußengehäuses 16 aus dem Akkuaußengehäuse 16 aus. Zudem tritt der Luftstrom 18 durch Öffnungen des Akkuaußengehäuses 16 aus, durch die die Kontakte 52, 54 der Werkzeugschnittstelle 46 kontaktierbar sind. Die Gehäusespalte 22 sind zumindest teilweise zwischen verschiedenen Bauteilen des Akkuaußengehäuse 16 angeordnet. Die Gehäusespalte 22 sind zwischen dem Grundkörper 56 und dem Deckelelement 58 des Akkuaußengehäuse 16 angeordnet. Die Gehäusespalte 22 werden bei einem Ladevorgang nicht von dem Akkuladegerät 32 verdeckt. Durch die Luftstromöffnung 20 und durch weitere Spalte des Akkuaußengehäuses 16 kann Staub und/oder Feuchtigkeit in das Akkuaußengehäuse 16 eindringen.

Der Grundkörper 56 weist ein Bodenelement 60 und zwei Wärmeabstrahlmittel 30 auf. Das Bodenelement 60 begrenzt den Akku 10 auf einer Unterseite, auf einer Vorderseite und auf einer Hinterseite, jeweils bezogen auf eine Koppelrichtung der Werkzeugschnittstelle 46. Zudem bildet das Bodenelement 60 vier an die Unterseite angrenzende Ecken. Das Bodenelement 60 ist als ein Kunststoffteil ausgebildet.

Die zwei Wärmeabstrahlmittel 30 begrenzen den Akku 10 jeweils auf einer Seite. Die Wärmeabstrahlmittel 30 sind als Aluminiumkörper ausgebildet. Die Wärmeabstrahlmittel 30 weisen an einer Außenseite Kühlrippen auf. Die Wärmeabstrahlmittel 30, der Grundkörper 56 und das Deckelelement 58 sind miteinander verschraubt. Zusammen umschließen die Wärmeabstrahlmittel 30, der Grundkörper 56 und das Deckelelement 58 den Zellblock 12 vollständig. Alternativ oder zusätzlich könnte ein Akku Wärmeabstrahlmittel, beispielsweise an der Vorderseite, an der Rückseite und/oder an der Unterseite, aufweisen.

Der Zellblock 12 weist Wärmeableitmittel 28, mehrere Akkuzellen 64, ein Zellblockgehäuse 66, eine nicht näher dargestellte Elektronik und Befestigungsmittel 70 auf. Die Elektronik ist dazu vorgesehen, Akkuspannungen und Temperaturen der Akkuzellen 64 zu überwachen und eine Beschädigung der Akkuzellen 64 zu vermeiden. Das Zellblockgehäuse 66 ist dazu vorgesehen, die Wärmeableitmittel 28, die Akkuzellen 64, die Elektronik und die Befestigungsmittel 70 zu einer Baugruppe zu verbinden, die den Zellblock 12 bildet.

Das Zellblockgehäuse 66 begrenzt einen Innenraum, in dem die Elektronik angeordnet ist. Die Kontakte 52, 54 der Werkzeugschnittstelle 46 sind teilweise in das Zellblockgehäuse 66 eingegossen. Das Zellblockgehäuse 66 weist Klimatisierungsöffnungen 62 auf, die mit einer hier nicht näher dargestellten wasserdichten, atmungsaktiven Membran verschlossen sind.

Die Dichtvorrichtung 14 ist dazu vorgesehen, einen von dem Zellblockgehäuse 66 aufgespannten Raum des Zellblocks 12 abzudichten. Die Dichtvorrichtung 14 weist eine Dichtfolie 24, ein erstes Dichtmittel 72 und ein zweites Dichtmittel 74 auf. Die Dichtfolie 24 ist schlauchförmig ausgebildet. Alternativ könnte die Dichtfolie sackförmig ausgebildet sein. Die Dichtfolie 24 ist selbstschrumpfend ausgebildet. Die Dichtfolie 24 liegt an der Vorderseite, an der Hinterseite und an den beiden Lateralseiten an dem Zellblock 12 an. Die Dichtfolie 24 liegt an den Wärmeableitmitteln 28 des Zellblocks 12 direkt flächig an.

Das erste Dichtmittel 72 ist als eine Dichtmasse ausgebildet. Hier ist das erste Dichtmittel 72 als ein Butyldichtstoff ausgebildet. Das erste Dichtmittel 72 ist dazu vorgesehen, einen Spalt zwischen dem Zellblockgehäuse 66 und der Dichtfolie 24 abzudichten. Somit verhindert das erste Dichtmittel 72 ein Eindringen von Staub und/oder Feuchtigkeit in den Zellblock 12.

Das zweite Dichtmittel 74 dichtet eine der Werkzeugschnittstelle 46 abgewandte Unterseite des Zellblocks 12 ab. Das zweite Dichtmittel 74 ist als eine selbstklebende Folie ausgebildet. Das zweite Dichtmittel 74 verschließt eine der Werkzeugschnittstelle 46 abgewandte Öffnung der schlauchförmigen Dichtfolie 24. Somit umschließt die Dichtvorrichtung 14 den Zellblock 12 auf fünf Seiten. Die sechste Seite wird von dem Zellblockgehäuse 66 abgedichtet.

Die Wärmeableitmittel 28 sind dazu vorgesehen, Wärme bei einem Ladevorgang und einem Entladevorgang aus dem Zellblock 12 abzuleiten. Die Wärmeableitmittel 28 erstrecken sich entlang einer Geraden durch den gesamten Zellblock 12. Auf zwei einander abgewandten Seiten der Wärmeableitmittel 28 sind die Akkuzellen 64 angeordnet. Die Wärmeableitmittel 28 begrenzen teilzylinderförmige Aussparungen, die dazu vorgesehen sind, die Akkuzellen 64 zumindest teilweise aufzunehmen. Zwischen den Wärmeableitmitteln 28 und den Akkuzellen 64 ist jeweils eines der Befestigungsmittel 70 angeordnet. Die Befestigungsmittel 70 verhindern einen direkten Kontakt zwischen den Wärmeableitmitteln 28 und den Akkuzellen 64. Die Befestigungsmittel 70 sind als elektrisch isolierende und zumindest teilelastische Schichtelemente ausgebildet.

Die Wärmeableitmittel 28 und die Wärmeabstrahlmittel 30 sind als voneinander getrennt ausgebildete Bauteile gebildet. Die Wärmeableitmittel 28 und die Wärmeabstrahlmittel 30 sind durch Schrauben 76 miteinander verbunden. Die Schrauben 76 drücken eines der Wärmeableitmittel 28 und eines der Wärmeabstrahlmittel 30 von zwei verschiedenen Seiten gegen die Dichtfolie 24. Somit bewirken die Schrauben 76 eine Presskraft auf die Dichtfolie 24. Dadurch liegen die Wärmeableitmittel 28 und die Wärmeabstrahlmittel 30 flächig an der Dichtfolie 24 an.

Bei einem Laden und einem Entladen in den Akkuzellen 64 entstehende Wärme leiten die Befestigungsmittel 70 zu den Wärmeableitmitteln 28. Die Wärmeableitmittel 28 leiten diese Wärme aus dem Zellblock 12 heraus zu der Dichtfolie 24. Die Dichtfolie 24 leitet einen wesentlichen Anteil der Wärme zu den Wärmeabstrahlmitteln 30. Einen weiteren Anteil der Wärme leiten die Schrauben 76 zu den Wärmeabstrahlmitteln 30. Die Wärmeabstrahlmittel 30 geben die Wärme durch Abstrahlen und Konvektion an eine Umgebung des Akkus 10 ab. Die Akkukühlvorrichtung 26 ist somit dazu vorgesehen, den Zellblock 12 im Wesentlichen von dem Luftstrom 18 unabhängig zu kühlen.

## Patentansprüche

1. Akku, insbesondere Werkzeugakku, mit einem Zellblock (12) mit mehreren Akkuzellen (64), mit einer Dichtvorrichtung (14), die dazu vorgesehen ist, den Zellblock (12) wenigstens staubdicht und/oder wasserdicht zu verschließen, und mit einem Akkuaußengehäuse (16), welches dazu vorgesehen ist, einen Luftstrom (18) zwischen dem Akkuaußengehäuse (16) und der Dichtvorrichtung (14) entlang zu leiten, **dadurch gekennzeichnet, dass** die Dichtvorrichtung (14) eine Dichtfolie (24) aufweist, die den Zellblock (12) auf zumindest einer Ebene umschließt und an zumindest vier Seiten an dem Zellblock (12) anliegt.

2. Akku nach Anspruch 1, **dadurch gekennzeichnet, dass** das Akkuaußengehäuse (16) eine Luftstromöffnung (20) begrenzt, die dazu vorgesehen ist, den Luftstrom (18) in das Akkuaußengehäuse (16) einzuleiten.

3. Akku nach Anspruch 1 oder 2, **dadurch gekennzeichnet, dass** das Akkuaußengehäuse (16) dazu vorgesehen ist, den Luftstrom (18) durch zumindest einen Gehäusespalt (22) des Akkuaußengehäuses (16) auszuleiten, wobei der Gehäusespalt (22) zwischen zwei Gehäuseteilen des Akkuaußengehäuses (16) angeordnet ist.

4. Akku nach einem der vorhergehenden Ansprüche, **gekennzeichnet durch** eine Akkukühlvorrichtung (26), die dazu vorgesehen ist, den Zellblock (12) im Wesentlichen von dem Luftstrom (18) unabhängig zu kühlen.

5. Akku nach Anspruch 4, **dadurch gekennzeichnet, dass** die Akkukühlvorrichtung (26) zumindest ein in dem Zellblock (12) angeordnetes Wärmeableitmittel (28) aufweist, das dazu vorgesehen ist, Wärme aus dem Zellblock (12) abzuleiten.

6. Akku nach Anspruch 5, **dadurch gekennzeichnet, dass** die Akkukühlvorrichtung (26) ein Wärmeabstrahlmittel (30) aufweist, das dazu vorgesehen ist, die von dem Wärmeableitmittel (28) abgeleitete Wärme zumindest abzustrahlen.

7. Akku nach einem der Ansprüche 5 oder 6, **dadurch gekennzeichnet, dass** die Dichtfolie (24) an dem zumindest einen Wärmeableitmittel (28) des Zellblocks (12) direkt flächig anliegt.

8. Akku nach einem der Ansprüche 6 oder 7, **dadurch gekennzeichnet, dass** das Wärmeableitmittel (28) und das Wärmeabstrahlmittel (30) flächig an der Dichtfolie (24) anliegen.

9. Akku nach einem der vorhergehenden Ansprüche, **dadurch gekennzeichnet, dass** die Dichtvorrichtung (14) zumindest ein erstes Dichtmittel (72) aufweist, welches dafür vorgesehen ist, einen Spalt zwischen einem Zellblockgehäuse (66) und der Dichtfolie (24) abzudichten.

10. Akku nach einem der vorhergehenden Ansprüche, **dadurch gekennzeichnet, dass** die Dichtvorrichtung (14) zumindest ein zweites Dichtmittel (72) aufweist, welches dafür vorgesehen ist, eine Seite des Zellblocks (12) derart abzudichten, dass die Dichtvorrichtung (14) den Zellblock (12) auf fünf Seiten umschließt.

11. Akku nach einem der vorhergehenden Ansprüche, **dadurch gekennzeichnet, dass** die Dichtfolie als eine insbesondere durch Wärmeeinwirkung selbstschrumpfende Folie ausgebildet ist.

12. Akku nach einem der vorhergehenden Ansprüche, **dadurch gekennzeichnet, dass** das zweite Dichtmittel (74) als eine selbstklebende Folie ausgebildet ist.

13. System mit einem Akkuladegerät (32) und einem Akku (10) nach einem der vorhergehenden Ansprüche.

14. System nach Anspruch 13, **dadurch gekennzeichnet, dass** das Akkuladegerät (32) eine Ladegerätelektronik (34) und eine Ladegerätkühlvorrichtung (36) aufweist, die dazu vorgesehen ist, den durch den Akku (10) geleiteten Luftstrom (18) zumindest teilweise zur Kühlung der Ladegerätelektronik (34) zu verwenden.

15. System nach Anspruch 14, **dadurch gekennzeichnet, dass** die Ladegerätkühlvorrichtung (36) einen Ventilator (38) aufweist, der den Luftstrom (18) erzeugt.

## Claims

1. Battery, in particular tool battery, with a cell block (12) having a plurality of battery cells (64), with a sealing device (14) which is provided to close the cell block (12) at least in a dustproof and/or waterproof manner, and with a battery outer housing (16) which is provided to conduct an airflow (18) along between the battery outer housing (16) and the sealing device (14), **characterized in that** the sealing device (14) has a sealing film (24) which surrounds the cell block (12) on at least one plane and lies against the cell block (12) on at least four sides.

2. Battery according to Claim 1, **characterized in that** the battery outer housing (16) bounds an airflow opening (20) which is provided to conduct the airflow (18) into the battery outer housing (16).

3. Battery according to Claim 1 or 2, **characterized in that** the battery outer housing (16) is provided to conduct the airflow (18) out through at least one housing gap (22) of the battery outer housing (16), wherein the housing gap (22) is arranged between two housing parts of the battery outer housing (16).

4. Battery according to one of the preceding claims, **characterized by** a battery cooling device (26) which is provided to cool the cell block (12) substantially independently of the airflow (18).

5. Battery according to Claim 4, **characterized in that** the battery cooling device (26) has at least one heat-dissipating means (28) which is arranged in the cell block (12) and is provided to dissipate heat from the cell block (12).

6. Battery according to Claim 5, **characterized in that** the battery cooling device (26) has a heat-emitting means (30) which is provided at least to emit the heat dissipated by the heat-dissipating means (28).

7. Battery according to either of Claims 5 and 6, **characterized in that** the sealing film (24) lies flat directly against the at least one heat-dissipating means (28) of the cell block (12).

8. Battery according to either of Claims 6 and 7, **characterized in that** the heat-dissipating means (28) and the heat-emitting means (30) lie flat against the sealing film (24).

9. Battery according to one of the preceding claims, **characterized in that** the sealing device (14) has at least one first sealing means (72) which is provided to seal a gap between a cell block housing (66) and the sealing film (24).

10. Battery according to one of the preceding claims, **characterized in that** the sealing device (14) has at least one second sealing means (72) which is provided to seal a side of the cell block (12) in such a manner that the sealing device (14) surrounds the cell block (12) on five sides.

11. Battery according to one of the preceding claims, **characterized in that** the sealing film is designed as a film which is self-shrinking in particular by the action of heat.

12. Battery according to one of the preceding claims, **characterized in that** the second sealing means (74) is designed as a self-adhesive film.

13. System with a battery charging unit (32) and a battery (10) according to one of the preceding claims.

14. System according to Claim 13, **characterized in that** the battery charging unit (32) has an electronic charging unit system (34) and a charging unit cooling device (36) which is provided to use the airflow (18) conducted through the battery (10) at least partially for cooling the electronic charging unit system (34).

15. System according to Claim 14, **characterized in that** the charging unit cooling device (36) has a fan (38) which produces the airflow (18).

## Revendications

1. Accumulateur, notamment accumulateur pour outil, comprenant un bloc de cellules (12) avec plusieurs cellules d'accumulateur (64), comprenant un dispositif d'étanchéité (14) qui est conçu pour fermer le bloc de cellules (12) au moins hermétiquement à la poussière et/ou de manière étanche à l'eau, et comprenant un boîtier externe d'accumulateur (16) qui est conçu pour guider un flux d'air (18) entre le boîtier externe d'accumulateur (16) et le dispositif d'étanchéité (14), **caractérisé en ce que** le dispositif d'étanchéité (14) possède un film d'étanchéité (24) qui entoure le bloc de cellules (12) sur au moins un plan et repose contre le bloc de cellules (12) sur au moins quatre côtés.

2. Accumulateur selon la revendication 1, **caractérisé en ce que** le boîtier externe d'accumulateur (16) délimite une ouverture d'écoulement d'air (20) qui est conçue pour le guidage en entrée du flux d'air (18) dans le boîtier externe d'accumulateur (16).

3. Accumulateur selon la revendication 1 ou 2, **caractérisé en ce que** le boîtier externe d'accumulateur (16) est conçu pour le guidage en sortie du flux d'air (18) à travers au moins un interstice de boîtier (22) du boîtier externe d'accumulateur (16), l'interstice de boîtier (22) étant disposé entre deux parties de boîtier du boîtier externe d'accumulateur (16).

4. Accumulateur selon l'une des revendications précédentes, **caractérisé par** un dispositif de refroidissement d'accumulateur (26) qui est conçu pour refroidir le bloc de cellules (12) sensiblement indépendamment du flux d'air (18).

5. Accumulateur selon la revendication 4, **caractérisé en ce que** le dispositif de refroidissement d'accumulateur (26) possède au moins un moyen d'évacuation de chaleur (28) disposé dans le bloc de cellules (12), lequel est conçu pour évacuer la chaleur hors du bloc de cellules (12).

6. Accumulateur selon la revendication 5, **caractérisé en ce que** le dispositif de refroidissement d'accumulateur (26) possède un moyen de dissipation de chaleur (30) qui est conçu pour dissiper la chaleur évacuée par le moyen d'évacuation de chaleur (28).

7. Accumulateur selon la revendication 5 ou 6, **caractérisé en ce que** le film d'étanchéité (24) repose à plat directement sur l'au moins un moyen d'évacuation de chaleur (28) du bloc de cellules (12).

8. Accumulateur selon l'une des revendications 6 ou 7, **caractérisé en ce que** le moyen d'évacuation de chaleur (28) et le moyen de dissipation de chaleur (30) reposent à plat sur le film d'étanchéité (24).

9. Accumulateur selon l'une des revendications précédentes, **caractérisé en ce que** le dispositif d'étanchéité (14) possède au moins un premier moyen d'étanchéité (72) qui est conçu pour rendre étanche un interstice entre un boîtier de bloc de cellules (66) et le film d'étanchéité (24).

10. Accumulateur selon l'une des revendications précédentes, **caractérisé en ce que** le dispositif d'étanchéité (14) possède au moins un deuxième moyen d'étanchéité (72) qui est conçu pour rendre étanche un côté du bloc de cellules (12) de telle sorte que le dispositif d'étanchéité (14) entoure le bloc de cellules (12) sur cinq côtés.

11. Accumulateur selon l'une des revendications précédentes, **caractérisé en ce que** le film d'étanchéité est réalisé sous la forme d'un film autorétractable, notamment sous l'effet de la chaleur.

12. Accumulateur selon l'une des revendications précédentes, **caractérisé en ce que** le deuxième moyen d'étanchéité (74) est réalisé sous la forme d'un film autocollant.

13. Système comprenant un chargeur d'accumulateur (32) et un accumulateur (10) selon l'une des revendications précédentes.

14. Système selon la revendication 13, **caractérisé en ce que** le chargeur d'accumulateur (32) possède une électronique de chargeur (34) et un dispositif de refroidissement de chargeur (36), lesquels sont conçus pour utiliser au moins partiellement le flux d'air (18) guidé à travers l'accumulateur (10) pour le refroidissement de l'électronique de chargeur (34).

15. Système selon la revendication 14, **caractérisé en ce que** le dispositif de refroidissement de chargeur (36) possède un ventilateur (38) qui génère le flux d'air (18).
